(19) Europäisches Patentamt / European Patent Office / Office européen des brevets

(11) **EP 4 297 218 B1**

(12) **EUROPEAN PATENT SPECIFICATION**

(45) Date of publication and mention
of the grant of the patent:
**10.12.2025   Bulletin 2025/50**

(21) Application number: **22762352.7**

(22) Date of filing: **07.02.2022**

(51) International Patent Classification (IPC):
*H02H 3/40* (2006.01)     *H02J 3/12* (2006.01)

(52) Cooperative Patent Classification (CPC):
**H02H 3/402;** Y02E 10/56

(86) International application number:
**PCT/CN2022/075394**

(87) International publication number:
**WO 2022/183885 (09.09.2022 Gazette 2022/36)**

(54) **LOW-CAPACITIVE-REACTANCE PROTECTION METHOD AND SYSTEM, AND COMPUTER-READABLE STORAGE MEDIUM AND COMPUTER PROGRAM PRODUCT**

VERFAHREN UND SYSTEM ZUM SCHUTZ VOR SCHWACHER REAKTANZ SOWIE COMPUTERLESBARES SPEICHERMEDIUM UND COMPUTERPROGRAMMPRODUKT

PROCÉDÉ ET SYSTÈME DE PROTECTION À FAIBLE RÉACTANCE CAPACITIVE, AINSI QUE SUPPORT DE STOCKAGE LISIBLE PAR ORDINATEUR ET PRODUIT PROGRAMME D'ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.03.2021   CN 202110235447**

(43) Date of publication of application:
**27.12.2023   Bulletin 2023/52**

(73) Proprietor: **China Electric Power Research Institute**
**Beijing 100192 (CN)**

(72) Inventors:
• **ZHOU, Zexin**
  **Beijing 100192 (CN)**
• **GUO, Yarong**
  **Beijing 100192 (CN)**
• **LIANG, Ying**
  **Beijing 100192 (CN)**
• **YANG, Guosheng**
  **Beijing 100192 (CN)**
• **WANG, Xingguo**
  **Beijing 100192 (CN)**
• **DU, Dingxiang**
  **Beijing 100192 (CN)**
• **CAO, Hong**
  **Beijing 100192 (CN)**
• **WANG, Shuyang**
  **Beijing 100192 (CN)**

(74) Representative: **White, Andrew John et al**
**Mathys & Squire**
**The Shard**
**32 London Bridge Street**
**London SE1 9SG (GB)**

(56) References cited:
**CN-A- 101 320 911     CN-A- 101 593 970**
**CN-A- 101 741 070     CN-A- 113 131 447**
**JP-B2- 5 537 318     US-A- 5 796 258**
**US-A1- 2017 227 595**

• **EISSA M M: "Ground Distance Relay Compensation Based on Fault Resistance Calculation", IEEE TRANSACTIONS ON POWER DELIVERY, IEEE SERVICE CENTER, NEW YORK, NY, US, vol. 21, no. 4, 1 October 2006 (2006-10-01), pages 1830 - 1835, XP001546301, ISSN: 0885-8977, DOI: 10.1109/ TPWRD.2006.874621**

**Description**

CROSS-REFERENCE TO RELATED APPLICATIONS

This application is filed based on and claims priority to Chinese Patent application No. 202110235447.7 filed on March 3, 2021 and entitled "METHOD AND SYSTEM FOR LOW CAPACITIVE REACTANCE PROTECTION.

TECHNICAL FIELD

The application relates to the field of relay protection in a power system, and in particularly to a method and system for low capacitive reactance protection, a computer-readable storage medium, and a computer program product.

BACKGROUND

With access of new energies and power electronics to a power grid, the power grid in China is facing serious challenges.

First challenge: after the new energy is accessed, a short-circuit current is limited. Due to an influence of a control system strategy after a fault occurs to a new energy power supply, a fault current presents a characteristic of limited amplitude, which greatly reduces a sensitivity of a traditional protection principle which identifies the fault using characteristics of the fault current.

Second challenge: when a flexible direct current (DC) is connected to an alternating current (AC) system, a fault current will present a draw-out characteristic, which will increase a braking current and weaken fault characteristics. The increase of the braking current and weakening of the fault characteristics will reduce a sensitivity of an existing protection, which will lead to the protection failing to operate and inability to quickly remove the fault, seriously affecting reliability of the power supply and stability of the system.

Third challenge: in order to adapt to access and transmission of large-scale new energies such as wind power, photovoltaic or the like, and to solve prominent problems such as reactive power balance, voltage control or the like, a large number of power electronic devices with various kinds are adopted in the power grid, such as a Unified Power Flow Control (UPFC) device, a controllable shunt reactor, etc. A high proportion of power electronic devices are accessed to the power grid, which leads to significant changes in a structure of the power grid and fault characteristics, greatly reduces reliability of protection, leads to malfunction of the protection, and affects stability of the system.

Existing transmission lines adopt a principle of current differential protection, which has the following shortcomings.

Access of the new energies and the power electronic devices has changed the structure of the power grid. Furthermore, due to an influence of the device's own bearing capacity and characteristics of a control system thereof, fault characteristics of the power grid are weakened and the short-circuit current after the fault occurs is greatly reduced; when a fault occurs through a high transition resistor, a fault current will be less than a load current, the principle of current differential protection is difficult to adapt to complex and variable application scenarios of the power grid, an ability of fault identification is greatly reduced, and a sensitivity of the current differential protection is reduced.

When the line is used as an outgoing line of a flexible direct system, due to functions of a flexible direct control system, the flexible direct system provides a draw-out short-circuit current when an internal fault occurs to the line, which increases the braking current and decreases an action current, presenting characteristics of an external fault. When series compensation is overcompensated, the same problems exist, and the principle of current differential protection is difficult to identify the fault with the draw-out characteristic, which leads to the differential protection failing to operate and reduction of reliability of the current differential protection in severe cases.

In order to eliminate an influence of a capacitive current on the transmission line, the current differential protection must introduce a voltage to compensate the capacitive current. When the controllable shunt reactor is adopted in the line, a compensation method of the capacitive current is difficult to adapt to different control tap positions of the controllable shunt reactor, which will cause an action current of a part of the tap positions to be not equal to zero when the external fault occurs, generating a risk of malfunction, and reducing selectivity of the current differential protection.

When a fault of a single-phase grounding through a transition resistance occurs to the line, a phase selector is difficult to identify the fault phase due to an influence of the load current, and there is a problem of tripping a three-phase line due to the fault of the single-phase.

Related technology is discussed in JP5537318B2 which relates to an accident zone discrimination means suitable for a distribution line, and US5796258A which relates to a system for automatically locating faults on an electrical transmission line by processing voltage and current phasors measured at a single end of the line.

# EP 4 297 218 B1

## SUMMARY

The present invention is defined in the claims, and from now on will be denoted as "the application". The application provides a method for low capacitive reactance protection.

The application further provides a system for low capacitive reactance protection, including a sampling unit, a calculation part, a key setting value determination part, a compensation control part and an action control part.

The method of the application has a simple principle, may accurately and quickly identify line faults and improve reliability of line protection, has a simple protection principle, a fast action speed and high sensitivity, and is not affected by system operation modes and fault types, and reliability and sensitivity of the method are superior to existing protection.

An embodiment of the application provides a computer program product, including a computer program or instruction. Any one of the methods for low capacitive reactance protection is implemented when the computer program or instruction is executed by a processor.

An embodiment of the application provides a computer-readable storage medium, having stored thereon a computer program. The computer program includes a program instruction, and the program instruction allows a processor to execute any one of the methods for low capacitive reactance protection when the program instruction is executed by the processor.

The embodiments of the application have the following advantageous effects.

The embodiments of the application provide a method and system for low capacitive reactance protection, a computer-readable storage medium, and a computer program product. The method includes the following operations. Sampling values of a three-phase current and voltage of a line are acquired, and a phasor value of the three-phase current and a phasor value of the voltage are determined according to the sampling values. A capacitive reactance to ground is determined according to a ratio. An action zone of the low capacitive reactance protection is determined according to an impedance parameter of the line, and a key setting value in the action zone of the low capacitive reactance protection is determined. An amplitude compensation or a soft compensation is performed. An action of the low capacitive reactance protection is performed on the line, in response to that the capacitive reactance to ground enters the action zone of the low capacitive reactance protection and an amplitude of the sum of the current phasors on two sides meets a criterion of current multi-point confirmation after the amplitude compensation or the soft compensation. **In** the method, the capacitive reactance to ground is determined according to the determined phasor value of the three-phase current and the determined phasor value of the voltage, the action zone of the low capacitive reactance protection is determined according to the impedance parameter of the line, the key setting value in the action zone of the low capacitive reactance protection is determined, and the action of the low capacitive reactance protection is performed on the line after compensation and meeting a condition, so that line faults are accurately and quickly identified, and reliability of line protection is improved.

## BRIEF DESCRIPTION OF THE DRAWINGS

FIG. 1 is a flowchart of a method for low capacitive reactance protection according to the application.

FIG. 2 is an equivalent diagram of a transmission line of a method for low capacitive reactance protection according to the application.

FIG. 3 is a line diagram of an action zone of low capacitive reactance protection of a method for low capacitive reactance protection according to the application.

FIG. 4 is a line diagram of determining a capacitive reactance line intercept setting value by a method for low capacitive reactance protection according to the application.

FIG. 5 is a diagram of current multi-point confirmation of a method for low capacitive reactance protection according to the application.

FIG. 6 is a logic diagram of low capacitive reactance protection of a method for low capacitive reactance protection according to the application.

FIG. 7 is a line diagram of an action result of low capacitive reactance protection for an internal fault by a method for low capacitive reactance protection according to the application.

FIG. 8 is a line diagram of an action result of low capacitive reactance protection for an external fault by a method for low capacitive reactance protection according to the application.

FIG. 9 is a line diagram of an action result of low capacitive reactance protection for normal operation by a method for low capacitive reactance protection according to the application.

FIG. 10 is a line diagram of an action result of low capacitive reactance protection for system oscillation by a method for low capacitive reactance protection according to the application.

FIG. 11 is a line diagram of an action result of low capacitive reactance protection for an internal fault occurred during system oscillation, by a method for low capacitive reactance protection according to the application.

FIG. 12 is a line diagram of an action result of low capacitive reactance protection for an internal fault occurred when a controllable reactor is 100% put into operation, by a method for low capacitive reactance protection according to the application.

FIG. 13 is a line diagram of an action result of low capacitive reactance protection for an internal fault occurred when a controllable reactor is 67% put into operation, by a method for low capacitive reactance protection according to the application.

FIG. 14 is a line diagram of an action result of low capacitive reactance protection for an internal fault occurred to a line with a series compensation capacitor installed, by a method for low capacitive reactance protection according to the application.

FIG. 15 is a line diagram of an action result of low capacitive reactance protection for a fault occurred to an AC transmission line where a new energy is transmitted through a flexible direct island mode, by a method for low capacitive reactance protection according to the application.

FIG. 16 is a line diagram of an action result of low capacitive reactance protection for an internal fault occurred to a disconnection phase when PT single-phase disconnection occurs to a line, by a method for low capacitive reactance protection according to the application.

FIG. 17 is a line diagram of an action result of low capacitive reactance protection for a fault occurred to phase A through an 800Q transition resistor, by a method for low capacitive reactance protection according to the application.

FIG. 18 is a structural diagram of a system for low capacitive reactance protection according to the application.

DETAILED DESCRIPTION

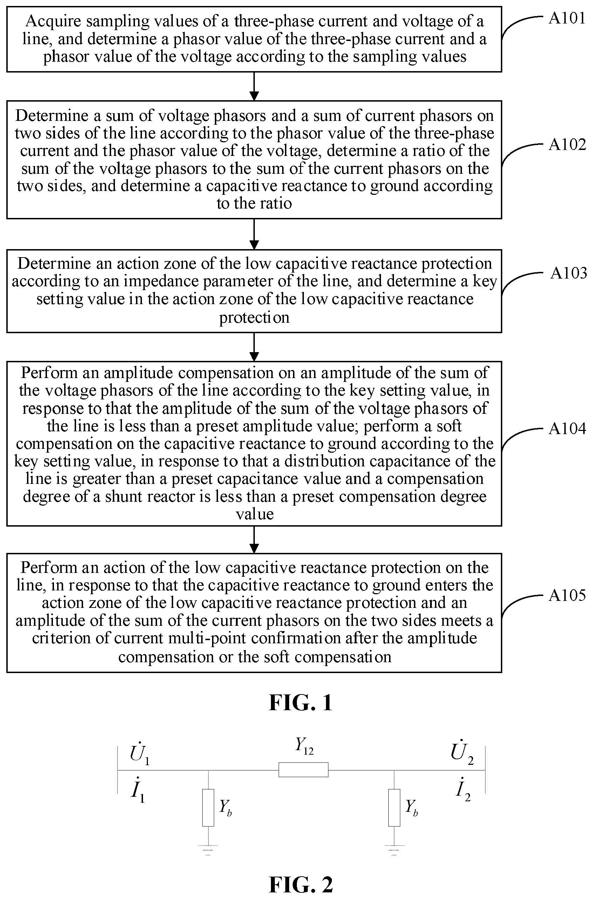

In order to make the purpose, technical solutions and advantages of the embodiments of the application clearer, the technical solutions of the embodiments of the application will be clearly and completely described below with reference to the drawings in the embodiments of the application. It is apparent that the described embodiments are only part of the embodiments of the application, rather than all of the embodiments. Components of the embodiments of the application generally described and shown in the drawings here may be arranged and designed in various different configurations. Therefore, the following detailed descriptions of the embodiments of the application provided in the drawings are not intended to limit the scope of protection of the application, instead, only intended to represent selected embodiments of the application.
Exemplary embodiments of the application are described with reference to the drawings. However, the application may be implemented in many different forms and is not limited to the embodiments described here. These embodiments are provided to thoroughly and completely disclose the application and fully convey the scope of the application to those skilled in the art. Terms in the exemplary embodiments represented in the drawings are not limitations of the application. In the drawings, the same units/components are marked with the same reference symbol.
Unless otherwise specified, terms used here (including technological terms) have meanings commonly understood by those skilled in the art. Furthermore, it may be understood that terms defined in commonly used dictionaries should be understood as having meanings consistent with the context of their relevant fields, and should not be understood as having idealistic or overly formal meanings.
The application provides a method for low capacitive reactance protection, as shown in FIG. 1, the method includes the following operations A101 to A105.

At A101, sampling values of a three-phase current and voltage of a line are acquired, and a phasor value of the three-phase current and a phasor value of the voltage are determined according to the sampling values.

At A102, a sum of voltage phasors and a sum of current phasors on two sides of the line are determined according to the phasor value of the three-phase current and the phasor value of the voltage, a ratio of the sum of the voltage phasors to the sum of the current phasors on the two sides is determined, and a capacitive reactance to ground is determined according to the ratio.

At A103, an action zone of the low capacitive reactance protection is determined according to an impedance parameter of the line, and a key setting value in the action zone of the low capacitive reactance protection is determined.

At A104, an amplitude compensation is performed on an amplitude of the sum of the voltage phasors of the line according to the key setting value, in response to that the amplitude of the sum of the voltage phasors of the line is less than a preset amplitude value; a soft compensation is performed on the capacitive reactance to ground according to the key setting value, in response to that a distribution capacitance of the line is greater than a preset capacitance value and a compensation degree of a shunt reactor is less than a preset compensation degree value.

At A105, an action of the low capacitive reactance protection is performed on the line, in response to that the capacitive reactance to ground enters the action zone of the low capacitive reactance protection and an amplitude of the sum of the current phasors on the two sides meets a criterion of current multi-point confirmation after the amplitude compensation or the soft compensation.

According to the present invention, the key setting value includes at least one of a reactance line setting value, a capacitive reactance line intercept setting value, a capacitive reactance line setting value, a resistance line setting value, or a negative resistance line setting value.

In some embodiments of the application, the sum of the voltage phasors is determined according to phasor values of three-phase voltages on the two sides of the line, in response to that a Potential Transformer (PT) disconnection does not occur to the line; and the sum of the voltage phasors is determined according to an inherent parameter of the line and a phasor value of a voltage on one side of the line, in response to that the PT disconnection occurs on another side of the line.

In some embodiments of the application, the current multi-point confirmation is performed using an inverse time logic.

In some embodiments of the application, the criterion of the current multi-point confirmation includes that a number of points for the current multi-point confirmation is determined according to the amplitude of the sum of the current phasors.

In some embodiments of the application not covered by the claimed invention, the application is further described below in conjunction with the embodiments: a voltage phasor and a current phasor are calculated by a recursive algorithm for sampling values. The recursive algorithm for sampling values is indicated by the following formulas:

$$a_k = a_{k-1} + \frac{2}{N}\left[f_T(t_k) - f_T(t_{k-N})\right]\sin\frac{2k\pi}{N} \quad (1)$$

$$b_k = b_{k-1} + \frac{2}{N}\left[f_T(t_k) - f_T(t_{k-N})\right]\cos\frac{2k\pi}{N} \quad (2)$$

$$\dot{X}_k = a_k + \mathrm{j}b_k \quad (3)$$

In formula (1) and formula (2), $f_T(t_k)$ is a sampling value at moment $t_k$, $f_T(t_{k-N})$ is a sampling value at moment $t_{k-N}$, $N$ is a number of sampling points in one cycle of power frequency, $a_k$ is a real part of a phasor calculated by the recursive algorithm for sampling values, $b_k$ is an imaginary part of a phasor calculated by the recursive algorithm for sampling values, and $\dot{X}_k$ is a phasor value calculated by the recursive algorithm for sampling values.

In some embodiments of the application not covered by the claimed invention, sampling values of three-phase voltages on two sides of the line are $u_a(t)$, $u_b(t)$ and $u_c(t)$, and phasor values calculated by a Fourier recursive algorithm for sampling values are $\dot{U}_A$, $\dot{U}_B$ and $\dot{U}_C$.

In some embodiments of the application not covered by the claimed invention, sampling values of three-phase currents on two sides of the line are $i_a(t)$, $i_b(t)$ and $i_c(t)$, and phasor values calculated by the Fourier recursive algorithm for sampling values are $\dot{I}_A$, $\dot{I}_B$ and $\dot{I}_C$.

In some embodiments of the application not covered by the claimed invention, a capacitive reactance to ground of an inherent parameter of the line is calculated as follows. By equivalence of a transmission line as shown in FIG. 2, it may obtain the following formula:

$$\begin{aligned}
\dot{I}_{\Sigma} &= \dot{I}_1 + \dot{I}_2 \\
&= Y_b \dot{U}_1 + Y_{12}(\dot{U}_1 - \dot{U}_2) + Y_b \dot{U}_2 + Y_{12}(\dot{U}_2 - \dot{U}_1) \\
&= Y_b(\dot{U}_1 + \dot{U}_2) \\
&= Y_b \dot{U}_{\Sigma}
\end{aligned} \quad (4)$$

In formula (4), $\dot{U}_1$ and $\dot{U}_2$ are voltages on two sides of the line, $\dot{U}_\varepsilon$ is a sum of voltage phasors on two sides of the line, $\dot{I}_1$ and $\dot{I}_2$ are currents on two sides of the line, $\dot{I}_\varepsilon$ is a sum of current phasors on two sides of the line, $Y_b$ is an admittance of the line to ground, and $Y_{12}$ is an admittance of the line.

In some embodiments of the application not covered by the claimed invention, a capacitive reactance to ground is indicated by the following formula:

$$Z_{\Sigma} = \frac{\dot{U}_{\Sigma}}{\dot{I}_{\Sigma}} = \frac{1}{Y_b} = R_{\Sigma} + jX_{\Sigma} \quad (5)$$

In formula (5), $Z_\varepsilon$ is an impedance to ground; $R_\varepsilon$ is a real part of the impedance to ground, expressed as a resistance; and $X_\varepsilon$ is an imaginary part of the impedance to ground, expressed as a reactance or capacitance. A reactance to ground is an inherent parameter of the line $2X_c$ during normal operation or an external fault, and $X_c$ is a capacitive reactance of the line.

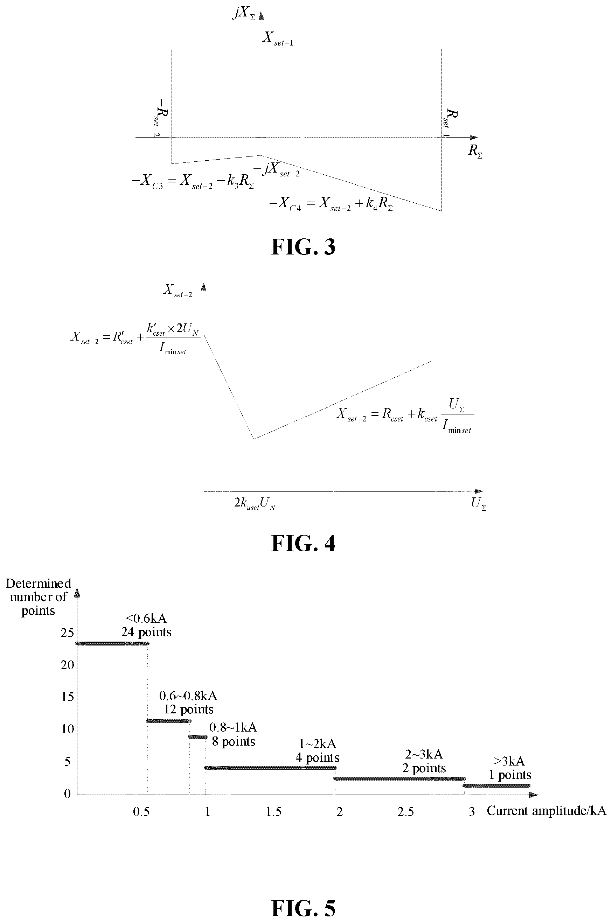

In some embodiments of the application not covered by the claimed invention, a protection action zone of the line is constructed as follows. An action zone of the low capacitive reactance protection is shown in FIG. 3, and five key setting values in the action zone are $X_{set\text{-}1}$, $X_{set\text{-}2}$, $X_C$, $R_{set\text{-}1}$ and $R_{set\text{-}2}$.

In some embodiments of the application not covered by the claimed invention, the first key setting value, i.e., the reactance line setting value $X_{set\text{-}1}$ is calculated by the following formula:

$$X_{set-1} = R_{xset} + k_{xset} Z_{L1} \quad (5\text{-}1)$$

In formula (5-1), $Z_{L1}$ is an amplitude of impedance of the line; $k_{xset}$ is a setting coefficient of the impedance of the line; and $R_{xset}$ is a margin setting value of a reactance line.

In some embodiments of the application not covered by the claimed invention, the second key setting value, i.e., the capacitive reactance line intercept setting value $X_{set\text{-}2}$ is calculated by the following formula:

$$X_{set-2} = R_{cset} + k_{cset} \frac{U_{\Sigma}}{I_{\min set}} \quad (5\text{-}2)$$

In formula (5-2), $R_{cset}$ is a margin setting value of a capacitive reactance intercept; and $k_{cset}$ is a coefficient of the capacitive reactance intercept.

In some embodiments of the application not covered by the claimed invention, the third key setting value, i.e., the capacitive reactance line setting values $X_{C3}$ and $X_{C4}$ are calculated by the following formula, where slope setting values are $k_3$ and $k_4$, $k_3$ is a slope of the capacitive reactance line in a third quadrant; and $k_4$ is a slope of the capacitive reactance line in a fourth quadrant.

$$-X_{C3} = X_{set-2} - k_3 R_{\Sigma}, \quad -X_{C4} = X_{set-2} + k_4 R_{\Sigma} \quad (5\text{-}3)$$

In some embodiments of the application not covered by the claimed invention, the fourth key setting value, i.e., the resistance line setting value $R_{set\text{-}1}$ is calculated by the following formula:

$$R_{set-1} = R_{rset} + \frac{U_{\Sigma}}{I_{\min set}} \quad (5\text{-}4)$$

In formula (5-4), $U_{\Sigma} = |\dot{U}_{\Sigma}|$ is an amplitude of a sum of voltage phasors; $I_{min\ set}$ is a minimum current for an

identifiable fault; and $R_{rset}$ is a margin setting value of the resistance line.

In some embodiments of the application not covered by the claimed invention, the fifth key setting value, i.e., the negative resistance line setting value $R_{set\text{-}2}$ is calculated by the following formula:

$$-R_{set-2} = R_{xset} + k_{xset}Z_{L1} \quad (5\text{-}5)$$

It may be understood that an absolute value of $R_{set\text{-}2}$ is the same as the reactance line setting value. The above setting values may be solidified in a relay protection device without manual setting.

**In** some embodiments of the application not covered by the claimed invention, a process of voltage adaptive compensation is as follows. **In** order to prevent protection malfunction caused by a too small voltage of an external fault of a single power line, an adaptive compensation is performed on the sum of the voltage phasors when an amplitude of the sum of the voltage phasors is too low, and the compensation method is indicated by the following formula:

$$\dot{U}_\Sigma = \begin{cases} \dfrac{2k_{uset}U_N}{\left|\dot{U}_\Sigma\right|}\dot{U}_\Sigma & \left|\dot{U}_\Sigma\right| < 2k_{uset}U_N \\[3mm] \dot{U}_\Sigma & \left|\dot{U}_\Sigma\right| \geq 2k_{uset}U_N \end{cases} \quad (6)$$

In formula (6), $U_N$ is a rated voltage, and $k_{uset}$ is a low voltage coefficient. While voltage compensation is performed adaptively, the action zone of the low capacitive reactance protection is adjusted adaptively, that is, value of $X_{set\text{-}2}$ is adjusted adaptively, $X_{set\text{-}2}$ is set according to the line shown in FIG. 4.

That is, when $|\dot{U}_\Sigma| = 0$, $X_{set-2} = R'_{cset} + \dfrac{k'_{cset} \times 2U_N}{I_{min\,set}}$ ; and when $|\dot{U}_\Sigma| = 2k_{uset}U_N$, $X_{set-2} = R_{cset} + \dfrac{2k_{cset}k_{uset}U_N}{I_{min\,set}}$ .

In some embodiments of the application not covered by the claimed invention, a process of current multi-point confirmation is as follows. In order to prevent protection malfunction in a transient process of an external fault, logic of the current multi-point confirmation is constructed using an inverse time logic, the current confirmation is shown in FIG. 5, and a criterion thereof is:

$$\left|\dot{I}_\Sigma\right| > I_{set} \quad (7)$$

In formula (7), $|\dot{I}_\varepsilon|$ is an amplitude of the sum of current phasors, and $I_{set}$ is a setting value of the current confirmation criterion.

In some embodiments of the application not covered by the claimed invention, the criterion of the current multi-point confirmation is tenable when the current confirmation criterion is met at N consecutive points. When the setting value of the current confirmation criterion is large, there is a small number of confirmation points, that is, N is small. When the setting value of the current confirmation criterion is small, there is a large number of confirmation points, that is, N is large.

In some embodiments of the application not covered by the claimed invention, the current confirmation criterion is an action with consecutive 24 cumulative points.

When the amplitude of the sum of the current phasors is greater than 3kA, 1 point is counted as 24 cumulative points.

When the amplitude of the sum of the current phasors is greater than 2kA, 1 point is counted as 12 cumulative points.

When the amplitude of the sum of the current phasors is greater than 1kA, 1 point is counted as 6 cumulative points.

When the amplitude of the sum of the current phasors is greater than 0.8 kA, 1 point is counted as 3 cumulative points.

When the amplitude of the sum of the current phasors is greater than 0.6 kA, 1 point is counted as 2 cumulative points.

When the amplitude of the sum of the current phasors is less than 0.6 kA, 1 point is counted as 1 cumulative point.

According to the present invention, a process of soft compensation is as follows. When a distribution capacitance of the line is too large and a compensation degree of a shunt reactor is low, a soft compensation technology is adopted to improve an identification ability of the low capacitive reactance protection. The compensation method is indicated by the following formula:

$$\begin{cases} X_L = \dfrac{X'_C X_C}{X'_C - X_C} \\[2mm] Z'_\Sigma = \dfrac{Z_\Sigma j X_L}{Z_\Sigma + j X_L} \end{cases} \quad (8)$$

In formula (8), $X_c$ is a value of a capacitive reactance to ground before compensation, $X'_c$ is an expected value of a capacitive reactance to ground after the soft compensation, preferably $X'_c = 4k\Omega$, $jX_L$ is a soft compensation reactance, and $Z'_\varepsilon$ is a capacitive reactance to ground after compensation.

In some embodiments of the application not covered by the claimed invention, a treatment process of PT disconnection is as follows. When PT disconnection occurs on one side of the line, a voltage on this side is replaced by a voltage which is $k_u$ times the rated voltage. That is, when PT disconnection occurs on one side of the line, a sum of the voltage phasors is calculated by the following formula:

$$\dot{U}_\Sigma = \left(1 + \frac{k_u U_N}{|\dot{U}_1|}\right)\dot{U}_1 \quad (9)$$

In formula (9), $\dot{U}_1$ is a voltage on a side without disconnection, and $k_u$ is a voltage replacement setting value when PT disconnection occurs, $k_u = 0.9$.

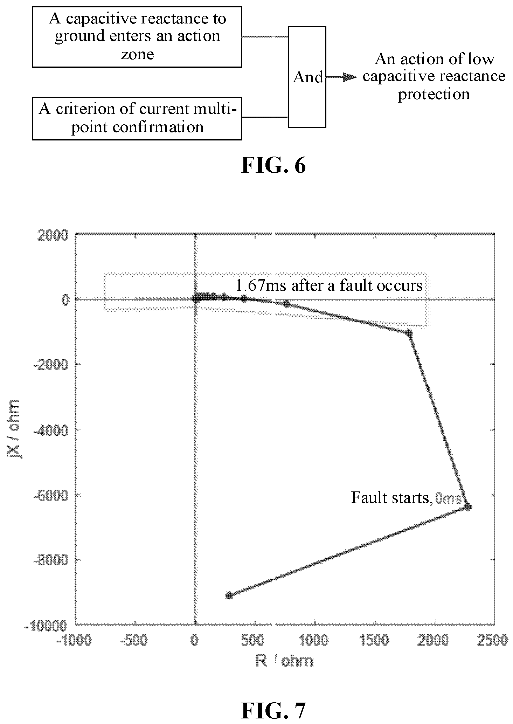

In some embodiments of the application, a principle of a low capacitive reactance protection logic is shown in FIG. 6. When the capacitive reactance to ground $Z'_\varepsilon$ enters the action zone of the low capacitive reactance protection after a fault occurs and compensation is performed by the soft compensation technology, and the criterion of the current multi-point confirmation is met, then an action of the low capacitive reactance protection is performed.

In some embodiments of the application not covered by the claimed invention, examples are provided below for detailed explanations.

1. Normal operation of a conventional transmission line, an internal fault occurs to a line and an external fault occurs to the line.

(1.1) Internal fault.

When an internal fault occurs to a conventional transmission line, low capacitive reactance protection is simulated, and the low capacitive reactance protection enters the action zone at 1.67ms. 3-point confirmation is made to a current, and the protection functions at 3.33ms then exits. The result is shown in FIG. 7.

(1.2) External fault.

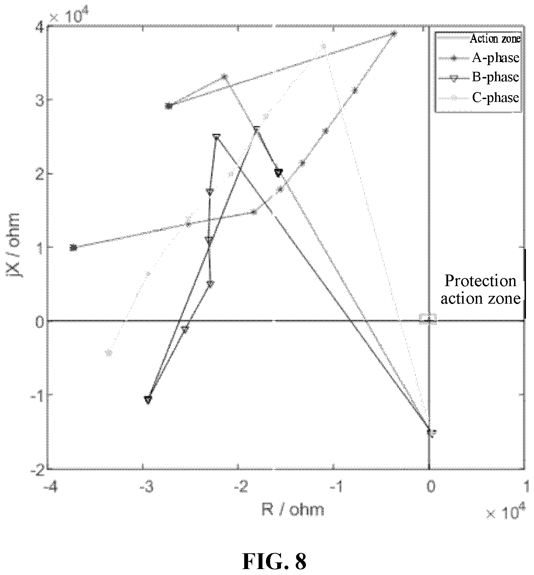

When an external fault occurs to a conventional transmission line, low capacitive reactance protection is far away from the action zone, and the protection does not function. The result is shown in FIG. 8.

(1.3) Normal operation.

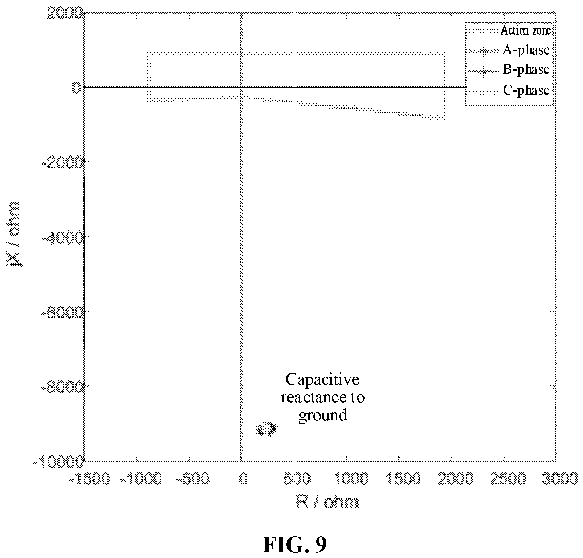

When a conventional transmission line operates normally, a calculation result of a capacitive reactance to ground is -j9000 Ω. Low capacitive reactance protection is far away from the action zone, and the protection does not function. The result is shown in FIG. 9.

2. System oscillation and a fault occurs to a line during oscillation.

(2.1) System oscillation.

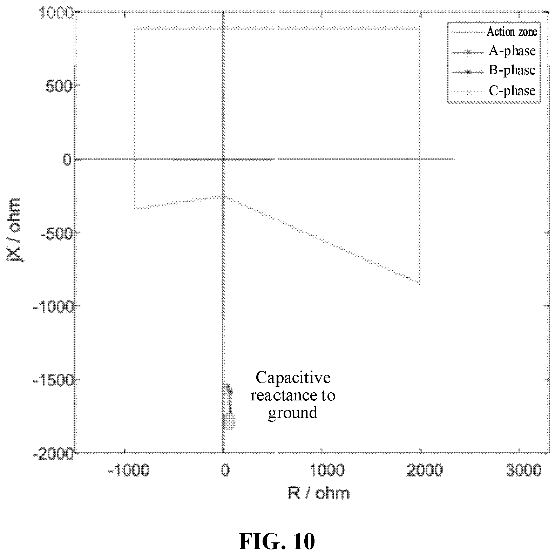

A simulation is performed for a 400km line (without a shunt reactor installed), a capacitive reactance to ground is -j2000Q during normal operation. When system oscillation occurs, the capacitive reactance to ground remains unchanged at -j2000Q. The low capacitive reactance protection does not function. The result is shown in FIG. 10.

(2.2) Internal three-phase fault occurs during oscillation.

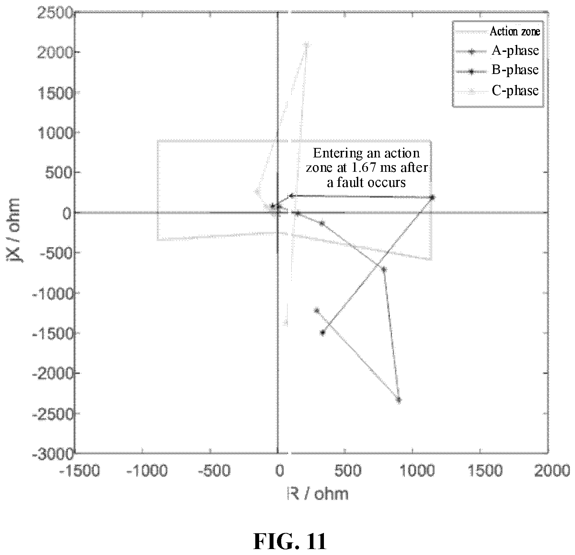

A simulation is performed for a 400km line (without a shunt reactor installed). The low capacitive reactance protection enters the action zone at 1.67ms when a three-phase fault occurs during system oscillation. 3-point confirmation is made to a current, and thus the low capacitive reactance protection functions at 3.33ms then exits. The result is shown in FIG. 11.

3. Fault occurs to an AC transmission line with a controllable shunt reactor installed.

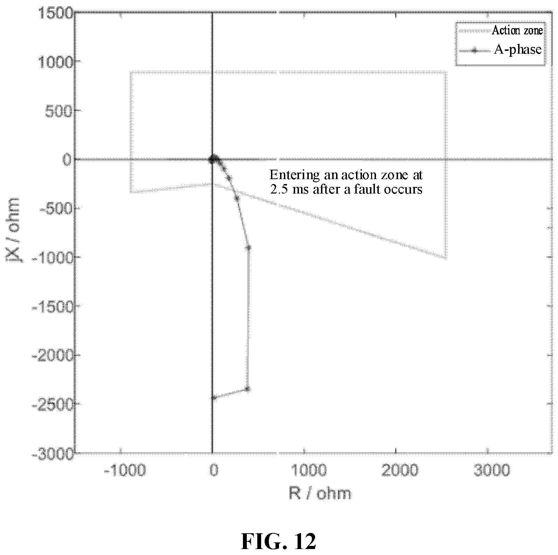

(3.1) A simulation is performed for a line with a controllable reactor. When the controllable reactor is 100% put into operation, an internal fault occurs to the transmission line, and the low capacitive reactance protection enters the action zone at 2.5ms. 2-point confirmation is made to a current, and the low capacitive reactance protection functions at 3.33ms then exits. The result is shown in FIG. 12.

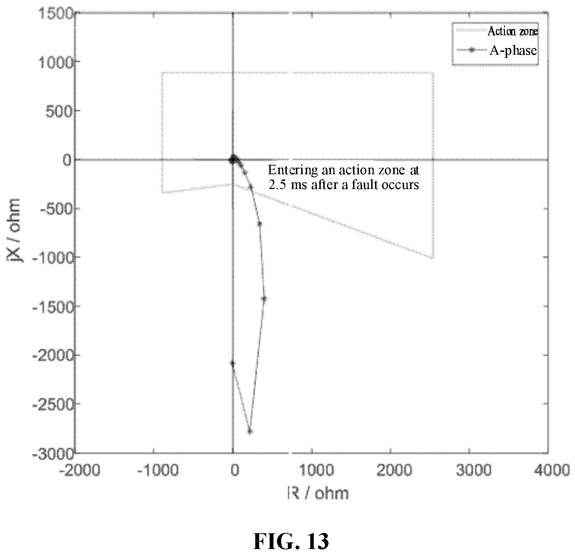

(3.2) A simulation is performed for a line with a controllable reactor. When the controllable reactor is 67% put into operation, an internal fault occurs to the transmission line, and the low capacitive reactance protection enters the action zone at 2.5ms. 2-point confirmation is made to a current, and the low capacitive reactance protection functions at 3.33ms then exits. The result is shown in FIG. 13.

4. Fault occurs to an AC transmission line with a series compensation capacitor installed.

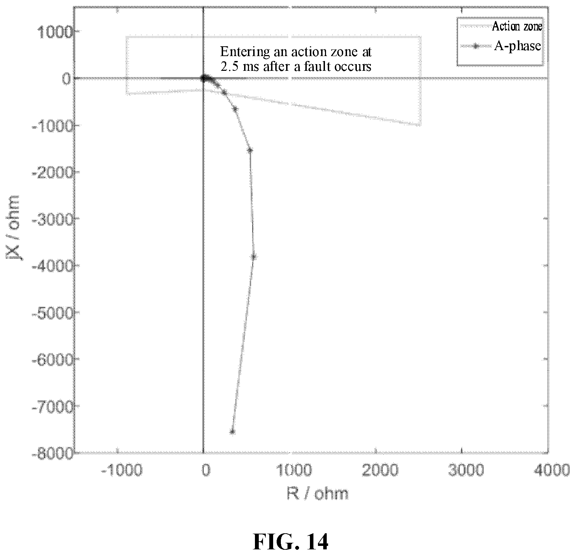

A simulation is performed for the AC transmission line with a series compensation capacitor installed. When an internal fault occurs, the low capacitive reactance protection enters the action zone at 2.5ms, 2-point confirmation is made to a current, and the low capacitive reactance protection functions at 3.33ms then exits. The result is shown in FIG. 14.

5. Fault occurs to an AC transmission line where a new energy is transmitted through a flexible direct island mode.

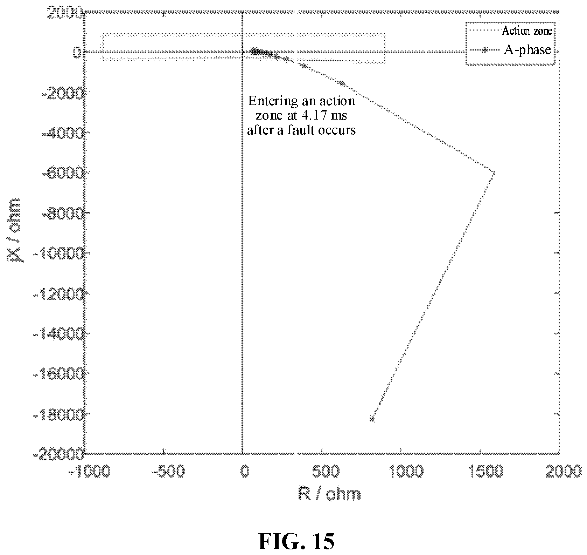

A simulation is performed for the AC transmission line where the new energy is transmitted through the flexible direct island mode, when an internal fault occurs, the low capacitive reactance protection enters the action zone at 4.17ms, a current multi-point confirmation is a 1-point confirmation, and thus the protection functions at 4.17ms then exits. The result is shown in FIG. 15.

6. Performance of low capacitive reactance protection in case of PT disconnection.

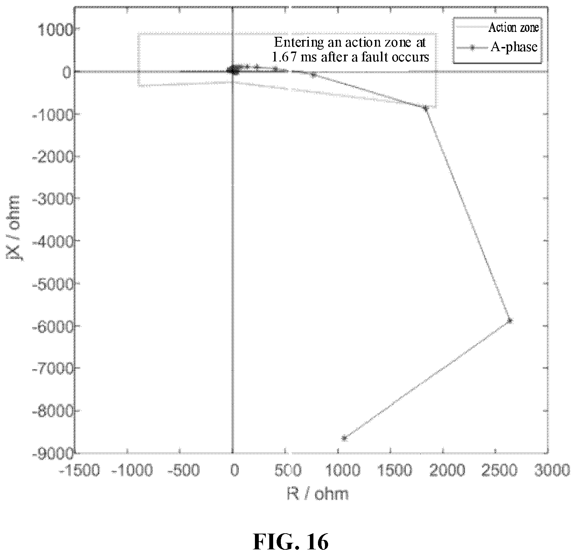

When PT single-phase disconnection occurs on one side of the transmission line, an internal fault occurs to the disconnection phase, the low capacitive reactance protection enters the action zone at 1.67ms, 3-point confirmation is made to a current, and the low capacitive reactance protection functions at 3.33ms then exits. The result is shown in FIG. 16.

7. Performance of low capacitive reactance protection in case of a fault occurred through a high transition resistor.

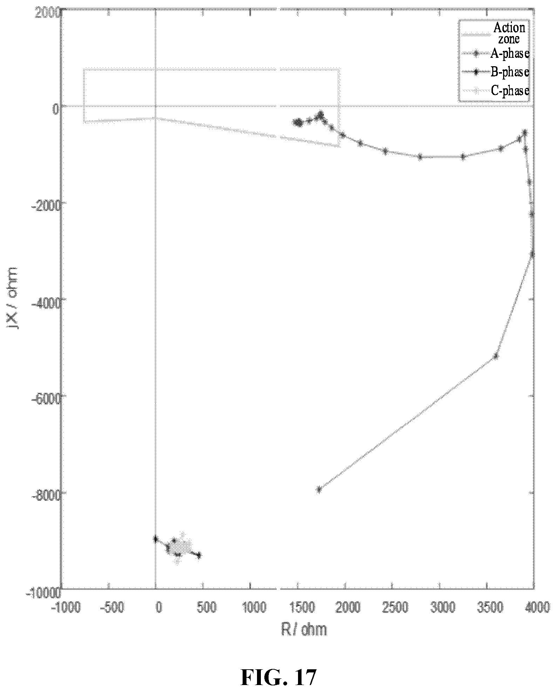

When a fault occurs to the transmission line through an 800Q transition resistor, the low capacitive reactance protection enters the action zone at 10.83ms, with a current of 0.6kA at this time, 12-point confirmation is made to the current, and the low capacitive reactance protection functions at 20ms then exits. The result is shown in FIG. 17.

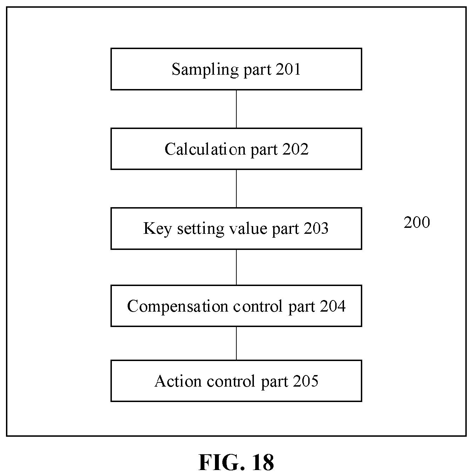

The application further provides a system 200 for low capacitive reactance protection, as shown in FIG. 18, the system includes a sampling part 201, a calculation part 202, a key setting value determination part 203, a compensation control part 204 and an action control part 205.

The sampling part 201 is configured to acquire sampling values of a three-phase current and voltage of a line, and determine a phasor value of the three-phase current and a phasor value of the voltage according to the sampling values.

The calculation part 202 is configured to determine a sum of voltage phasors and a sum of current phasors on two sides of the line according to the phasor value of the three-phase current and the phasor value of the voltage, determine a ratio of the sum of the voltage phasors to the sum of the current phasors on the two sides, and determine a capacitive reactance to ground according to the ratio.

The key setting value determination part 203 is configured to determine an action zone of the low capacitive reactance protection according to an impedance parameter of the line, and determine a key setting value in the action zone of the low capacitive reactance protection.

The compensation control part 204 is configured to perform an amplitude compensation on an amplitude of the sum of the voltage phasors of the line according to the key setting value, in response to that the amplitude of the sum of the voltage phasors of the line is less than a preset amplitude value; perform a soft compensation on the capacitive reactance to ground according to the key setting value, in response to that a distribution capacitance of the line is greater than a preset capacitance value and a compensation degree of a shunt reactor is less than a preset compensation degree value.

The action control part 205 is configured to perform an action of the low capacitive reactance protection on the line, in response to that the capacitive reactance to ground enters the action zone of the low capacitive reactance protection and an amplitude of the sum of the current phasors on the two sides meets a criterion of current multi-point confirmation after the amplitude compensation or the soft compensation.

In some embodiments of the application, the key setting value includes at least one of a reactance line setting value, a capacitive reactance line intercept setting value, a capacitive reactance line setting value, a resistance line setting value, or a negative resistance line setting value.

In some embodiments of the application, the calculation part is further configured to: determine the sum of the voltage phasors according to phasor values of three-phase voltages on the two sides of the line, in response to that PT disconnection does not occur to the line; and determine the sum of the voltage phasors according to an inherent parameter of the line and a phasor value of a voltage on one side of the line, in response to that the PT disconnection occurs on another side of the line.

In some embodiments of the application, the current multi-point confirmation of the action control part is performed using an inverse time logic.

In some embodiments of the application, the criterion of the current multi-point confirmation of the action control part includes that a number of points for the current multi-point confirmation is determined according to the amplitude of the sum of the current phasors.

The method of the application may accurately and quickly identify line faults and improve reliability of line protection, has a simple protection principle, a fast action speed and high sensitivity, and is not affected by system operation modes and fault types, and reliability and sensitivity of the method are superior to existing protection.

It may be understood by those skilled in the art that the embodiments of the application may be provided as methods, systems or computer program products. Therefore, the application may take forms of embodiments with entirely hardware, embodiments with entirely software, or embodiments combining software with hardware aspects. Furthermore, the application may take a form of a computer program product implemented on one or more computer-available storage media (including, but not limited to a disk storage, a Compact Disk Read Only Memory (CD-ROM), an optical storage, etc.) containing computer-available program codes therein. The solutions in the embodiments of the application may be implemented in various computer languages, such as an object-oriented programming language Java, an interpreted script language JavaScript, etc.

The application is described with reference to flowcharts and/or block diagrams of methods, devices (systems) and computer program products according to the embodiments of the application. It should be understood that computer program instructions may implement each flow and/or block in the flowcharts and/or the block diagrams, as well as combinations of flows and/or blocks in the flowcharts and/or the block diagrams. These computer program instructions may be provided to processors of a general purpose computer, a specialized computer, an embedded processor or other programmable data processing devices to generate a machine, such that instructions executed by the processors of the computer or other programmable data processing devices generate a device configured to implement functions specified in one or more flows of the flowcharts and/or one or more blocks of the block diagrams.

These computer program instructions may also be stored in a computer-readable memory which may guide a computer or other programmable data processing devices to operate in a specific manner, such that the instructions stored in the computer-readable memory generate a manufactured product including instruction devices, and the instruction devices implement functions specified in one or more flows of the flowcharts and/or one or more blocks of the block diagrams.

These computer program instructions may also be loaded onto a computer or other programmable data processing devices, such that a series of operations are executed on the computer or other programmable devices to generate computer-implemented processing, and thus the instructions executed on the computer or other programmable devices provide operations for implementing functions specified in one or more flows of the flowcharts and/or one or more blocks of the block diagrams.

Although preferred embodiments of the application have been described, those skilled in the art may make additional changes and modifications to these embodiments once they have knowledge of basic inventive concepts, within the scope of the appended claims.

It is apparent that those skilled in the art may make various modifications and variations to the application without departing from the scope of the application In this way, when these modifications and variations of the application fall within the scope of the claims of the application and their equivalent technologies, the application also intends to include these modifications and variations.

INDUSTRIAL PRACTICALITY

The embodiment of the application provides a method and system for low capacitive reactance protection, a computer-readable storage medium, and a computer program product. The method includes the following operations. Sampling values of a three-phase current and voltage of a line are acquired, and a phasor value of the three-phase current and a phasor value of the voltage are determined according to the sampling values. A capacitive reactance to ground is determined according to a ratio. An action zone of the low capacitive reactance protection is determined according to an impedance parameter of the line, and a key setting value in the action zone of the low capacitive reactance protection is determined. An amplitude compensation or a soft compensation is performed. An action of the low capacitive reactance protection is performed on the line, in response to that the capacitive reactance to ground enters the action zone of the low capacitive reactance protection and an amplitude of the sum of the current phasors on two sides meets a criterion of current multi-point confirmation after the amplitude compensation or the soft compensation. The method of the embodiments of the application may accurately and quickly identify line faults, and improve reliability of line protection.

**Claims**

1. A method for low capacitive reactance protection, comprising:

    acquiring (A101) sampling values of a three-phase current and voltage of a line, and determining a phasor value of the three-phase current and a phasor value of the voltage according to the sampling values;
    determining (A102) a sum of voltage phasors and a sum of current phasors on two sides of the line according to the phasor value of the three-phase current and the phasor value of the voltage, determining a ratio of the sum of the voltage phasors to the sum of the current phasors on the two sides, and determining a capacitive reactance to ground according to the ratio;
    determining (A103) an action zone of the low capacitive reactance protection according to an impedance parameter of the line, and determining a key setting value in the action zone of the low capacitive reactance protection;
    and **characterized in**:

    performing (A104) an amplitude compensation on an amplitude of the sum of the voltage phasors of the line according to the key setting value, in response to that the amplitude of the sum of the voltage phasors of the line is less than a preset amplitude value; performing a soft compensation on the capacitive reactance to ground according to the key setting value, in response to that a distribution capacitance of the line is greater than a preset capacitance value and a compensation degree of a shunt reactor is less than a preset compensation degree value; and
    performing (A105) an action of the low capacitive reactance protection on the line, in response to that the capacitive reactance to ground enters the action zone of the low capacitive reactance protection and an amplitude of the sum of the current phasors on the two sides meets a criterion of current multi-point confirmation after the amplitude compensation or the soft compensation;
    wherein the key setting value comprises at least one of a reactance line setting value, a capacitive reactance line intercept setting value, a capacitive reactance line setting value, a resistance line setting value, or a negative resistance line setting value;
    wherein the soft compensation is performed on the capacitive reactance to ground according to the key setting value by using the following formulas:

$$\begin{cases} X_L = \dfrac{X'_C X_C}{X'_C - X_C} \\ Z'_\Sigma = \dfrac{Z_\Sigma j X_L}{Z_\Sigma + j X_L} \end{cases}$$

    wherein $X_C$ is a value of a capacitive reactance to ground before compensation, $X'_C$ is an expected value of a capacitive reactance to ground after the soft compensation, $jX_L$ is a soft compensation reactance, $Z_\varepsilon$ is the capacitive reactance to ground, and $Z'_\varepsilon$ is a capacitive reactance to ground after compensation.

2. The method of claim 1, wherein the sum of the voltage phasors is determined according to phasor values of three-phase voltages on the two sides of the line, in response to that a Potential Transformer, PT, disconnection does not occur to the line; and the sum of the voltage phasors is determined according to an inherent parameter of the line and a phasor value of a voltage on one side of the line, in response to that the PT disconnection occurs on another side of the line.

3. The method of claim 1, wherein the current multi-point confirmation is performed using an inverse time logic.

4. The method of claim 1, wherein the criterion of the current multi-point confirmation is specifically that a number of points for the current multi-point confirmation is determined according to the amplitude of the sum of the current phasors.

5. A system (200) for low capacitive reactance protection, comprising:

    a sampling unit (201), configured to acquire sampling values of a three-phase current and voltage of a line, and determine a phasor value of the three-phase current and a phasor value of the voltage according to the sampling values;

a calculation part (202), configured to determine a sum of voltage phasors and a sum of current phasors on two sides of the line according to the phasor value of the three-phase current and the phasor value of the voltage, determine a ratio of the sum of the voltage phasors to the sum of the current phasors on the two sides, and determine a capacitive reactance to ground according to the ratio;

a key setting value determination part (203), configured to determine an action zone of the low capacitive reactance protection according to an impedance parameter of the line, and determine a key setting value in the action zone of the low capacitive reactance protection;

and **characterized in**:

a compensation control part (204), configured to perform an amplitude compensation on an amplitude of the sum of the voltage phasors of the line according to the key setting value, in response to that the amplitude of the sum of the voltage phasors of the line is less than a preset amplitude value; perform a soft compensation on the capacitive reactance to ground according to the key setting value, in response to that a distribution capacitance of the line is greater than a preset capacitance value and a compensation degree of a shunt reactor is less than a preset compensation degree value; and

an action control part (205), configured to perform an action of the low capacitive reactance protection on the line, in response to that the capacitive reactance to ground enters the action zone of the low capacitive reactance protection and an amplitude of the sum of the current phasors on the two sides meets a criterion of current multi-point confirmation after the amplitude compensation or the soft compensation;

wherein the key setting value comprises at least one of a reactance line setting value, a capacitive reactance line intercept setting value, a capacitive reactance line setting value, a resistance line setting value, or a negative resistance line setting value;

wherein the soft compensation is performed on the capacitive reactance to ground according to the key setting value by using the following formulas:

$$\begin{cases} X_L = \dfrac{X'_C X_C}{X'_C - X_C} \\ Z'_\Sigma = \dfrac{Z_\Sigma j X_L}{Z_\Sigma + j X_L} \end{cases}$$

wherein $X_C$ is a value of a capacitive reactance to ground before compensation, $X'_C$ is an expected value of a capacitive reactance to ground after the soft compensation, $jX_L$ is a soft compensation reactance, $Z_\varepsilon$ is the capacitive reactance to ground, and $Z'_\varepsilon$ is a capacitive reactance to ground after compensation.

6. The system of claim 5, wherein the calculation part (202) is further configured to:

determine the sum of the voltage phasors according to phasor values of three-phase voltages on the two sides of the line, in response to that a Potential Transformer, PT, disconnection does not occur to the line; and determine the sum of the voltage phasors according to an inherent parameter of the line and a phasor value of a voltage on one side of the line, in response to that the PT disconnection occurs on another side of the line.

7. The system of claim 5, wherein the action control part (205) is configured to perform the current multi-point confirmation using an inverse time logic.

8. The system of claim 5, wherein the criterion of the current multi-point confirmation is specifically that a number of points for the current multi-point confirmation is determined according to the amplitude of the sum of the current phasors.

9. A computer program product, comprising a computer program or instruction, wherein the method of any one of claims 1 to 4 is implemented when the computer program or instruction is executed by a processor.

10. A computer-readable storage medium, having stored thereon a computer program, the computer program comprising a program instruction, and the program instruction allowing a processor to execute the method of any one of claims 1 to 4 when the program instruction is executed by the processor.

**Patentansprüche**

1. Verfahren zum Schutz bei niedriger kapazitiver Reaktanz, umfassend:

   Erfassen (A101) von Abtastwerten eines Dreiphasenstroms und einer Dreiphasenspannung einer Leitung und Bestimmen eines Phasorwerts des Dreiphasenstroms und eines Phasorwerts der Spannung gemäß den Abtastwerten;
   Bestimmen (A102) einer Summe der Spannungsphasoren und einer Summe der Stromphasoren auf zwei Seiten der Leitung gemäß dem Phasorwert des Dreiphasenstroms und dem Phasorwert der Spannung, Bestimmen eines Verhältnisses der Summe der Spannungsphasoren zur Summe der Stromphasoren auf den zwei Seiten und Bestimmen einer kapazitiven Reaktanz gegen Erde gemäß dem Verhältnis;
   Bestimmen (A103) einer Aktionszone des Schutzes bei niedriger kapazitiver Reaktanz gemäß einem Impedanzparameter der Leitung und Bestimmen eines Schlüsseleinstellwerts in der Aktionszone des Schutzes bei niedriger kapazitiver Reaktanz;
   und **gekennzeichnet durch:**

   Durchführen (A104) einer Amplitudenkompensation an einer Amplitude der Summe der Spannungsphasoren der Leitung gemäß dem Schlüsseleinstellwert als Reaktion darauf, dass die Amplitude der Summe der Spannungsphasoren der Leitung kleiner als ein voreingestellter Amplitudenwert ist; Durchführen einer weichen Kompensation der kapazitiven Reaktanz gegen Erde gemäß dem Schlüsseleinstellwert als Reaktion darauf, dass eine Verteilungskapazität der Leitung größer als ein voreingestellter Kapazitätswert ist und ein Kompensationsgrad einer Nebenschlussdrossel kleiner als ein voreingestellter Kompensationsgradwert ist; und
   Durchführen (A105) einer Schutzaktion bei niedriger kapazitiver Reaktanz an der Leitung als Reaktion darauf, dass die kapazitive Reaktanz gegen Erde in die Aktionszone des Schutzes bei niedriger kapazitiver Reaktanz eintritt und eine Amplitude der Summe der Stromphasoren auf den zwei Seiten ein Kriterium der Strom-Mehrpunktbestätigung nach der Amplitudenkompensation oder der weichen Kompensation erfüllt;
   wobei der Schlüsseleinstellwert mindestens einen der folgenden Werte umfasst: einen Reaktanzlinieneinstellwert, einen Schnittpunkteinstellwert der kapazitiven Reaktanzlinie, einen Einstellwert der kapazitiven Reaktanzlinie, einen Widerstandslinieneinstellwert oder einen Einstellwert der negativen Widerstandslinie;
   wobei die sanfte Kompensation an der kapazitiven Reaktanz gegen Erde entsprechend dem Schlüsseleinstellwert unter Verwendung der folgenden Formeln durchgeführt wird:

$$\begin{cases} X_L = \dfrac{X'_C X_C}{X'_C - X_C} \\[2mm] Z'_\Sigma = \dfrac{Z_\Sigma j X_L}{Z_\Sigma + j X_L} \end{cases}$$

   wobei $X_C$ ein Wert einer kapazitiven Reaktanz gegen Erde vor der Kompensation ist, $X'_C$ ein erwarteter Wert einer kapazitiven Reaktanz gegen Erde nach der sanften Kompensation ist, $j X_L$ eine weiche Kompensationsreaktanz ist, $Z_\varepsilon$ die kapazitive Reaktanz gegen Erde ist und $Z'_\varepsilon$ eine kapazitive Reaktanz gegen Erde nach der Kompensation ist.

2. Verfahren nach Anspruch 1, wobei die Summe der Spannungsphasoren gemäß den Phasorwerten der Dreiphasenspannungen auf den zwei Seiten der Leitung bestimmt wird, als Reaktion darauf, dass keine Trennung des Spannungswandlers, PT, von der Leitung auftritt; und die Summe der Spannungsphasoren gemäß einem inhärenten Parameter der Leitung und einem Phasorwert einer Spannung auf einer Seite der Leitung als Reaktion darauf bestimmt wird, dass die PT-Trennung auf der anderen Seite der Leitung auftritt.

3. Verfahren nach Anspruch 1, wobei die aktuelle Mehrpunktbestätigung unter Verwendung einer inversen Zeitlogik durchgeführt wird.

4. Verfahren nach Anspruch 1, wobei das Kriterium der aktuellen Mehrpunktbestätigung insbesondere darin besteht, dass eine Anzahl von Punkten für die aktuelle Mehrpunktbestätigung gemäß der Amplitude der Summe der Stromphasoren bestimmt wird.

5. System (200) zum Schutz bei niedriger kapazitiver Reaktanz, umfassend:

eine Abtasteinheit (201), die konfiguriert ist, um Abtastwerte eines Dreiphasenstroms und einer Dreiphasenspannung einer Leitung zu erfassen und einen Phasorwert des Dreiphasenstroms und einen Phasorwert der Spannung gemäß den Abtastwerten zu bestimmen;
einen Berechnungsteil (202), der konfiguriert ist, um eine Summe von Spannungsphasoren und eine Summe von Stromphasoren auf zwei Seiten der Leitung gemäß dem Phasorwert des Dreiphasenstroms und dem Phasorwert der Spannung zu bestimmen, ein Verhältnis der Summe der Spannungsphasoren zur Summe der Stromphasoren auf den zwei Seiten zu bestimmen und eine kapazitive Reaktanz gegen Erde gemäß dem Verhältnis zu bestimmen;
einen Schlüsseleinstellwertbestimmungsteil (203), der konfiguriert ist, um eine Aktionszone des Schutzes bei niedriger kapazitiver Reaktanz gemäß einem Impedanzparameter der Leitung zu bestimmen und einen Schlüsseleinstellwert in der Aktionszone des Schutzes bei niedriger kapazitiver Reaktanz zu bestimmen;
und **gekennzeichnet durch:**

einen Kompensationssteuerteil (204), der konfiguriert ist, um eine Amplitudenkompensation an einer Amplitude der Summe der Spannungsphasoren der Leitung gemäß dem Schlüsseleinstellwert durchzuführen, als Reaktion darauf, dass die Amplitude der Summe der Spannungsphasoren der Leitung kleiner als ein voreingestellter Amplitudenwert ist; eine weiche Kompensation der kapazitiven Reaktanz gegen Erde gemäß dem Schlüsseleinstellwert als Reaktion darauf durchzuführen, dass eine Verteilungskapazität der Leitung größer als ein voreingestellter Kapazitätswert ist und ein Kompensationsgrad einer Nebenschlussdrossel kleiner als ein voreingestellter Kompensationsgradwert ist; und
einen Aktionssteuerteil (205), der konfiguriert ist, um eine Schutzaktion bei niedriger kapazitiver Reaktanz an der Leitung durchzuführen, als Reaktion darauf, dass die kapazitive Reaktanz gegen Erde in die Aktionszone des Schutzes bei niedriger kapazitiver Reaktanz eintritt und eine Amplitude der Summe der Stromphasoren auf den zwei Seiten ein Kriterium der Strom-Mehrpunktbestätigung nach der Amplitudenkompensation oder der weichen Kompensation erfüllt;
wobei der Schlüsseleinstellwert mindestens einen der folgenden Werte umfasst: einen Reaktanzlinieneinstellwert, einen Schnittpunkteinstellwert der kapazitiven Reaktanzlinie, einen Einstellwert der kapazitiven Reaktanzlinie, einen Widerstandslinieneinstellwert oder einen Einstellwert der negativen Widerstandslinie;
wobei die sanfte Kompensation an der kapazitiven Reaktanz gegen Erde entsprechend dem Schlüsseleinstellwert unter Verwendung der folgenden Formeln durchgeführt wird:

$$\begin{cases} X_L = \dfrac{X'_C X_C}{X'_C - X_C} \\ Z'_\Sigma = \dfrac{Z_\Sigma j X_L}{Z_\Sigma + j X_L} \end{cases}$$

wobei $X_C$ ein Wert einer kapazitiven Reaktanz gegen Erde vor der Kompensation ist, $X'_C$ ein erwarteter Wert einer kapazitiven Reaktanz gegen Erde nach der sanften Kompensation ist, $jX_L$ eine weiche Kompensationsreaktanz ist, $Z_\varepsilon$ die kapazitive Reaktanz gegen Erde ist und $Z'_\varepsilon$ eine kapazitive Reaktanz gegen Erde nach der Kompensation ist.

6. System nach Anspruch 5, wobei der Berechnungsteil (202) ferner konfiguriert ist zum:

Bestimmen der Summe der Spannungsphasoren gemäß den Phasorwerten der Dreiphasenspannungen auf den zwei Seiten der Leitung, als Reaktion darauf, dass keine Trennung des Spannungswandlers, PT, von der Leitung auftritt; und
Bestimmen der Summe der Spannungsphasoren gemäß einem inhärenten Parameter der Leitung und einem Phasorwert einer Spannung auf einer Seite der Leitung, als Reaktion darauf, dass die PT-Trennung auf der anderen Seite der Leitung auftritt.

7. System nach Anspruch 5, wobei der Aktionssteuerteil (205) konfiguriert ist, um die aktuelle Mehrpunktbestätigung unter Verwendung einer inversen Zeitlogik durchzuführen.

8. System nach Anspruch 5, wobei das Kriterium der aktuellen Mehrpunktbestätigung insbesondere darin besteht, dass eine Anzahl von Punkten für die aktuelle Mehrpunktbestätigung gemäß der Amplitude der Summe der aktuellen Phasoren bestimmt wird.

**9.** Computerprogrammprodukt, das ein Computerprogramm oder eine Anweisung umfasst, wobei das Verfahren nach einem der Ansprüche 1 bis 4 implementiert wird, wenn das Computerprogramm oder die Anweisung von einem Prozessor ausgeführt wird.

**10.** Computerlesbares Speichermedium, auf dem ein Computerprogramm gespeichert ist, wobei das Computerprogramm eine Programmanweisung umfasst und die Programmanweisung es einem Prozessor ermöglicht, das Verfahren nach einem der Ansprüche 1 bis 4 auszuführen, wenn die Programmanweisung vom Prozessor ausgeführt wird.

**Revendications**

**1.** Procédé de protection à faible réactance capacitive, comprenant :

l'acquisition (A101) de valeurs d'échantillonnage d'un courant triphasé et d'une tension d'une ligne, et la détermination d'une valeur de phaseur du courant triphasé et d'une valeur de phaseur de la tension en fonction des valeurs d'échantillonnage ;
la détermination (A102) d'une somme de phaseurs de tension et d'une somme de phaseurs de courant sur deux côtés de la ligne en fonction de la valeur de phaseur du courant triphasé et de la valeur de phaseur de la tension, la détermination d'un rapport entre la somme des phaseurs de tension et la somme des phaseurs de courant sur les deux côtés, et la détermination d'une réactance capacitive à la terre en fonction du rapport ;
la détermination (A103) d'une zone d'action de la protection à faible réactance capacitive en fonction d'un paramètre d'impédance de la ligne, et la détermination d'une valeur de réglage clé dans la zone d'action de la protection à faible réactance capacitive ;
et **caractérisé en** :

le fait d'effectuer (A104) une compensation d'amplitude sur une amplitude de la somme des phaseurs de tension de la ligne en fonction de la valeur de réglage clé, en réponse au fait que l'amplitude de la somme des phaseurs de tension de la ligne est inférieure à une valeur d'amplitude prédéfinie ; le fait d'effectuer une compensation douce sur la réactance capacitive à la terre en fonction de la valeur de réglage clé, en réponse au fait qu'une capacité de distribution de la ligne est supérieure à une valeur de capacité prédéfinie et qu'un degré de compensation d'un réacteur shunt est inférieur à une valeur de degré de compensation prédéfinie ; et
le fait d'effectuer (A105) une action de la protection à faible réactance capacitive sur la ligne, en réponse au fait que la réactance capacitive à la terre entre dans la zone d'action de la protection à faible réactance capacitive et qu'une amplitude de la somme des phaseurs de courant sur les deux côtés satisfait à un critère de confirmation multipoint de courant après la compensation d'amplitude ou la compensation douce ;
dans lequel la valeur de réglage clé comprend au moins l'une parmi une valeur de réglage de ligne de réactance, une valeur de réglage d'interception de ligne de réactance capacitive, une valeur de réglage de ligne de réactance capacitive, une valeur de réglage de ligne de résistance, ou une valeur de réglage de ligne de résistance négative ;
dans lequel la compensation douce est effectuée sur la réactance capacitive à la terre en fonction de la valeur de réglage clé à l'aide des formules suivantes :

$$\begin{cases} X_L = \dfrac{X'_C X_C}{X'_C - X_C} \\ Z'_\Sigma = \dfrac{Z_\Sigma j X_L}{Z_\Sigma + j X_L} \end{cases}$$

où $X_C$ est une valeur d'une réactance capacitive à la terre avant compensation, $X'_C$ est une valeur attendue d'une réactance capacitive à la terre après la compensation douce, $jX_L$ est une réactance de compensation douce, $Z_\varepsilon$ est la réactance capacitive à la terre, et $Z'_\varepsilon$ est une réactance capacitive à la terre après compensation.

**2.** Procédé selon la revendication 1, dans lequel la somme des phaseurs de tension est déterminée en fonction de valeurs de phaseurs de tensions triphasées sur les deux côtés de la ligne, en réponse au fait qu'une déconnexion d'un transformateur de potentiel, PT, ne se produit pas sur la ligne ; et la somme des phaseurs de tension est déterminée en fonction d'un paramètre inhérent à la ligne et d'une valeur de phaseur d'une tension d'un côté de la ligne, en réponse au fait que la déconnexion du TP se produit sur un autre côté de la ligne.

**3.** Procédé selon la revendication 1, dans lequel la confirmation multipoint de courant est effectuée à l'aide d'une logique temporelle inverse.

**4.** Procédé selon la revendication 1, dans lequel le critère de la confirmation multipoint de courant est spécifiquement qu'un nombre de points pour la confirmation multipoint de courant est déterminé en fonction de l'amplitude de la somme des phaseurs de courant.

**5.** Système (200) de protection à faible réactance capacitive, comprenant :

une unité d'échantillonnage (201), configurée pour acquérir des valeurs d'échantillonnage d'un courant triphasé et d'une tension d'une ligne, et déterminer une valeur de phaseur du courant triphasé et une valeur de phaseur de la tension en fonction des valeurs d'échantillonnage ;
une partie de calcul (202), configurée pour déterminer une somme de phaseurs de tension et une somme de phaseurs de courant sur deux côtés de la ligne en fonction de la valeur de phaseur du courant triphasé et de la valeur de phaseur de la tension, déterminer un rapport entre la somme des phaseurs de tension et la somme des phaseurs de courant sur les deux côtés, et déterminer une réactance capacitive à la terre en fonction du rapport ;
une partie de détermination de valeur de réglage clé (203), configurée pour déterminer une zone d'action de la protection à faible réactance capacitive en fonction d'un paramètre d'impédance de la ligne, et pour déterminer une valeur de réglage clé dans la zone d'action de la protection à faible réactance capacitive ;
et **caractérisé en** :

une partie de commande de compensation (204), configurée pour effectuer une compensation d'amplitude sur une amplitude de la somme des phaseurs de tension de la ligne en fonction de la valeur de réglage clé, en réponse au fait que l'amplitude de la somme des phaseurs de tension de la ligne est inférieure à une valeur d'amplitude prédéfinie ; effectuer une compensation douce sur la réactance capacitive à la terre en fonction de la valeur de réglage clé, en réponse au fait qu'une capacité de distribution de la ligne est supérieure à une valeur de capacité prédéfinie et qu'un degré de compensation d'un réacteur shunt est inférieur à une valeur de degré de compensation prédéfinie ; et
une partie de commande d'action (205), configurée pour effectuer une action de la protection à faible réactance capacitive sur la ligne, en réponse au fait que la réactance capacitive à la terre entre dans la zone d'action de la protection à faible réactance capacitive et qu'une amplitude de la somme des phaseurs de courant sur les deux côtés satisfait à un critère de confirmation multipoint de courant après la compensation d'amplitude ou la compensation douce ;
dans lequel la valeur de réglage clé comprend au moins l'une parmi une valeur de réglage de ligne de réactance, une valeur de réglage d'interception de ligne de réactance capacitive, une valeur de réglage de ligne de réactance capacitive, une valeur de réglage de ligne de résistance, ou une valeur de réglage de ligne de résistance négative ;
dans lequel la compensation douce est effectuée sur la réactance capacitive à la terre en fonction de la valeur de réglage clé à l'aide des formules suivantes :

$$\begin{cases} X_L = \dfrac{X'_C X_C}{X'_C - X_C} \\ Z'_\Sigma = \dfrac{Z_\Sigma j X_L}{Z_\Sigma + j X_L} \end{cases}$$

où $X_C$ est une valeur d'une réactance capacitive à la terre avant compensation, $X'_C$ est une valeur attendue d'une réactance capacitive à la terre après la compensation douce, $jX_L$ est une réactance de compensation douce, $Z_\varepsilon$ est la réactance capacitive à la terre, et $Z'_\varepsilon$ est une réactance capacitive à la terre après compensation.

**6.** Système selon la revendication 5, dans lequel la partie de calcul (202) est en outre configurée pour :

déterminer la somme des phaseurs de tension en fonction de valeurs de phaseurs de tensions triphasées sur les deux côtés de la ligne, en réponse au fait qu'une déconnexion d'un transformateur de potentiel, PT, ne se produit pas sur la ligne ; et

déterminer la somme des phaseurs de tension en fonction d'un paramètre inhérent à la ligne et d'une valeur de phaseur d'une tension d'un côté de la ligne, en réponse au fait que la déconnexion du TP se produit sur un autre côté de la ligne.

**7.** Système selon la revendication 5, dans lequel la partie de commande d'action (205) est configurée pour effectuer la confirmation multipoint de courant à l'aide d'une logique temporelle inverse.

**8.** Système selon la revendication 5, dans lequel le critère de la confirmation multipoint de courant est spécifiquement qu'un nombre de points pour la confirmation multipoint de courant est déterminé en fonction de l'amplitude de la somme des phaseurs de courant.

**9.** Produit-programme informatique, comprenant un programme informatique ou une instruction, dans lequel le procédé selon l'une quelconque des revendications 1 à 4 est mis en œuvre lorsque le programme informatique ou l'instruction est exécuté par un processeur.

**10.** Support de stockage lisible par ordinateur, sur lequel est stocké un programme informatique, le programme informatique comprenant une instruction de programme, et l'instruction de programme permettant à un processeur d'exécuter le procédé selon l'une quelconque des revendications 1 à 4 lorsque l'instruction de programme est exécutée par le processeur.

Acquire sampling values of a three-phase current and voltage of a line, and determine a phasor value of the three-phase current and a phasor value of the voltage according to the sampling values — A101

Determine a sum of voltage phasors and a sum of current phasors on two sides of the line according to the phasor value of the three-phase current and the phasor value of the voltage, determine a ratio of the sum of the voltage phasors to the sum of the current phasors on the two sides, and determine a capacitive reactance to ground according to the ratio — A102

Determine an action zone of the low capacitive reactance protection according to an impedance parameter of the line, and determine a key setting value in the action zone of the low capacitive reactance protection — A103

Perform an amplitude compensation on an amplitude of the sum of the voltage phasors of the line according to the key setting value, in response to that the amplitude of the sum of the voltage phasors of the line is less than a preset amplitude value; perform a soft compensation on the capacitive reactance to ground according to the key setting value, in response to that a distribution capacitance of the line is greater than a preset capacitance value and a compensation degree of a shunt reactor is less than a preset compensation degree value — A104

Perform an action of the low capacitive reactance protection on the line, in response to that the capacitive reactance to ground enters the action zone of the low capacitive reactance protection and an amplitude of the sum of the current phasors on the two sides meets a criterion of current multi-point confirmation after the amplitude compensation or the soft compensation — A105

**FIG. 1**

**FIG. 2**

**FIG. 3**

**FIG. 4**

**FIG. 5**

FIG. 6

FIG. 7

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110235447
- JP 5537318 B

- US 5796258 A